(19) Europäisches Patentamt
European Patent Office
Office européen des brevets

(11) EP 2 163 783 A2

(12) EUROPÄISCHE PATENTANMELDUNG

(43) Veröffentlichungstag:
17.03.2010 Patentblatt 2010/11

(51) Int Cl.:
F16F 9/512 (2006.01)    F16F 9/53 (2006.01)

(21) Anmeldenummer: 09169921.5

(22) Anmeldetag: 10.09.2009

(84) Benannte Vertragsstaaten:
AT BE BG CH CY CZ DE DK EE ES FI FR GB GR
HR HU IE IS IT LI LT LU LV MC MK MT NL NO PL
PT RO SE SI SK SM TR

(30) Priorität: 15.09.2008 DE 102008042078

(71) Anmelder: ZF Friedrichshafen AG
88038 Friedrichshafen (DE)

(72) Erfinder:
• Breun, Wolfgang
  97464, Niederwerrn (DE)
• Broocks, Wilhelm
  97273, Kürnach (DE)
• Gonschorrek, Hans
  97493, Bergrheinfeld (DE)
• Harwardt, Valentin
  38444, Wolfsburg (DE)

(54) **Schwingungsdämpfer mit amplitudenabhängiger Dämpfkraft**

(57) Schwingungsdämpfer, umfassend einen mit einem Dämpfmedium gefüllten Zylinder, in dem eine Kolbenstange mit einem Kolben axial beweglich geführt ist, wobei der Kolben den Zylinder in einen kolbenstangenseitigen und einen kolbenstangenfernen Arbeitsraum unterteilt und für mindestens eine Bewegungsrichtung der Kolbenstange ein Arbeitsraum für eine amplitudenselektive Dämpfkraft über eine Strömungsverbindung) mit einer Arbeitskammer in einem Gehäuse verbunden ist, wobei die Arbeitskammer durch einen axial beweglichen Trennkolben zum anderen Arbeitsraum abgetrennt ist und der Dämpfmediumstrom zwischen mindestens einer Arbeitskammer des Gehäuses und mindestens einem Arbeitsraum des Zylinders temperaturabhängig beeinflusst wird.

Fig. 1

EP 2 163 783 A2

**Beschreibung**

Die Erfindung betrifft einen Schwingungsdämpfer mit amplitudenabhängiger Dämpfkraft gemäß dem Oberbegriff von Patentanspruch 1.

Aus der DE 10 2004 034 057 B4 ist ein gattungsbildender Schwingungsdämpfer mit amplitudenabhängiger Dämpfkraft bekannt. Der Schwingungsdämpfer umfasst drei Funktionselemente, die die Dämpfkraft für jeweils eine Bewegungsrichtung beeinflussen. Ein erstes Element wird von einem Gehäuse als Teil einer Kolbenstange gebildet. In dem Gehäuse ist ein axial beweglicher Trennkolben gelagert, der das Gehäuse in zwei Arbeitskammern unterteilt. Ein an der Kolbenstange befestigter Kolben trennt zwei Arbeitsräume in einem Zylinder, wobei jeder Arbeitsraum mit jeweils einer Arbeitskammer über eine Strömungsverbindung in Kontakt steht.

Ein zweites die Dämpfkraft bestimmendes Element ist ein so genannter Voröffnungsquerschnitt. Dieser Voröffnungsquerschnitt kann wahlweise eine kleine Aussparung in einer Ventilscheibe des Kolbens sein oder von einer Prägung im Kolben selbst gebildet werden.

In dem Kolben sind Durchtrittskanäle ausgeführt, die mit mindestens einer Ventilscheibe ein Dämpfventil als drittes Element bilden. Für ein optimales Dämpfverhalten werden alle drei Elemente aufeinander abgestimmt. Der Voröffnungsquerschnitt und das von der mindestens einen Ventilscheibe gebildete Dämpfventil sowie das Gehäuse für die amplitudenabhängige Dämpfkraftbeeinflussung sind hydraulisch parallel geschaltet. Das Volumen des in dem Schwingungsdämpfer verwendeten Dämpfmediums verteilt sich auf die drei Elemente in Abhängigkeit der Strömungswiderstände, deren Größe wiederum von der Ein- oder Ausfederungsgeschwindigkeit abhängt. Bei kleinen Hubamplituden und niedriger Geschwindigkeit der Kolbenstangenbewegung werden der Voröffnungsquerschnitt und die Ventilscheiben erst dann voll wirksam, wenn der Trennkolben im Gehäuse seine Endstellung erreicht hat.

Ein akustisches Problem tritt dann auf, wenn der Trennkolben im Gehäuse sein Endstellung erreicht und für das Dämpfmedium nur noch zwei Strömungswege bzw. Dämpfelemente zur Verfügung stehen. Im genannten Stand der Technik wird für diesen Betriebszustand des Schwingungsdämpfers ein Trennkolben mit einem Elastomerkörper eingesetzt. Dieser Elastomerkörper vermindert zweifellos die Geräuschbildung im Schwingungsdämpfer. Trotzdem kann die bisher bekannte Ausführungsform des Schwingungsdämpfers mit amplitudenabhängiger Dämpfkraft nicht in allen Betriebszuständen hinsichtlich der Geräuschentwicklung überzeugen.

Aufgabe der vorliegenden Erfindung ist es, einen Schwingungsdämpfer bereitzustellen, der im relevanten Betriebsbereich zumindest geräuscharm funktioniert.

Erfindungsgemäß wird die Aufgabe dadurch gelöst, dass der Dämpfmediumstrom zwischen mindestens einer Arbeitskammer des Gehäuses und mindestens einem Arbeitsraum des Zylinders temperaturabhängig beeinflusst wird.

Umfangreiche Untersuchungen haben zu der Erkenntnis geführt, dass die Geräuschprobleme in Abhängigkeit von der Dämpfmediumtemperatur und folglich der Dämpfmediumviskosität auftreten. Mit der temperaturabhängigen Beeinflussung der amplitudenabhängigen Dämpfung wird das dafür vorgesehene Funktionselement in seiner Wirkung reduziert oder sogar abgeschaltet. Dann treten die bisher bekannten Geräuschprobleme nicht mehr auf. Bei sehr niedrigen Temperaturen und damit einer sehr hohen Viskosität des Dämpfmediums wird aufgrund einer Vielzahl von Bauteilen und Komponenten im Fahrzeug noch nicht das angestrebte Fahrkomfortniveau erreicht. Dann spielt es auch keine Rolle, ob der Schwingungsdämpfer eine amplitudenabhängige Dämpfkraft aufweist. In der Regel steigt die Temperatur im Schwingungsdämpfer schon nach einer vergleichsweise kurzen Fahrstrecke an, so dass dann auch die Funktion der amplitudenabhängigen Dämpfkraft zur Verfügung steht.

Bei einer Lösung ist das Gehäuse durch eine definierte Abstimmung der Strömungsverbindung temperaturabhängig stufenlos schaltbar. Als Dimensionierungsparameter dienen die Länge und der Durchmesser der Strömungsverbindung.

Eine Schaltfunktion für die Strömungsverbindung ist über einen Schaltfaktor VTP definiert, wobei der Schaltfaktor VTP größer ist als vier und gebildet wird aus dem Verhältnis eines Volumenstroms $V_{(25°; 50bar)}$ bei einer Temperatur von 25°C und einer Druckdifferenz von 50bar zwischen den Arbeitsräumen zu einem Volumenstrom $V_{(-25°; 10bar)}$ bei einer Temperatur von -25°C und Druckdifferenz von 10bar zwischen den Arbeitsräumen. Die Parameter der Strömungsverbindung müssen nicht durch unzumutbare Versuchsreihen ausprobiert werden, sondern lassen sich mittels einer Kombination aus wenigen Messungen und Berechnung festlegen.

Im Hinblick auf eine standardisierte Bauweise kann innerhalb der Strömungsverbindung ein Kalibrierröhrchen eingesetzt sein. Durch einfaches Austauschen des Kalibrierröhrchens können die Bedingungen für den Schaltfaktor leicht erfüllt werden, ohne dass es für verschiedene Fahrzeugtypen jeweils speziell angepasster Bauteile bedarf.

Bei einer Alternativlösung steuert eine temperaturabhängig wirksame Ventilscheibe den Durchflussquerschnitt der Strömungsverbindung. Der Vorteil besteht in der konstruktiv freieren Gestaltung der Strömungsverbindung, insbesondere, wenn man die temperaturabhängige Ventilscheibe an einer Wandung des Gehäuses fixiert, wobei der Begriff Wandung auch endseitige Böden des Gehäuses einschließt.

Anhand der folgenden Figurenbeschreibung soll die Erfindung näher erläutert werden.

Es zeigt:

Fig. 1  Schwingungsdämpfer im Längsschnitt

Fig. 2  Dämpfkraftkennlinien für einen Schwingungsdämpfer nach den Fig. 1 und 4 in Abhängigkeit des Kolbenhubs

Fig. 3  Volumenstromkennlinien in Abhängigkeit von der Druckdifferenz und von der Temperatur

Fig. 4  Schwingungsdämpfer mit einer temperaturabhängig wirksamen Ventilscheibe

Fig. 5  Schaltfunktion der Fig. 1 und 4 im Vergleich

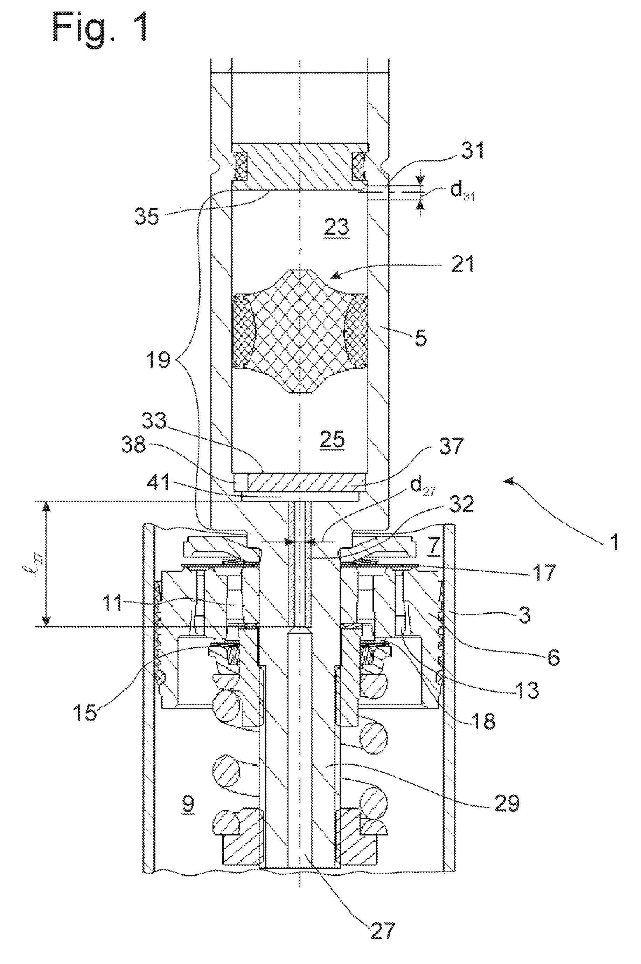

Die Fig. 1 zeigt einen Ausschnitt aus einem Schwingungsdämpfer 1, in dessen mit einem Dämpfmedium gefüllten Zylinder 3 eine Kolbenstange 5 axial beweglich geführt ist. Ein Kolben 6 unterteilt den Zylinder in einen kolbenstangenseitigen und einen kolbenstangenfernen Arbeitsraum 7; 9, wobei für jeweils eine Bewegungsrichtung der Kolbenstange ein Dämpfventil, in diesem Fall Durchtrittsquerschnitte 11; 13, die endseitig zumindest teilweise von mindestens einer Ventilscheibe 15; 17 abgedeckt werden, zur Verfügung steht. Den Dämpfventilen hydraulisch parallel geschaltet ist mindestens ein so genannter Voröffnungsquerschnitt 18, der von einer Kerbe im Kolben 6 oder einer Aussparung in einer der Ventilscheiben gebildet werden kann. Der Voröffnungsquerschnitt ist kleiner ausgeführt als einer der Durchtrittsquerschnitte 11; 13.

Innerhalb der Kolbenstange 5 ist ein Gehäuse 19 ausgeführt, in dem ein Trennkolben 21 axial beweglich angeordnet ist. Der Trennkolben unterteilt das Gehäuse 19 in zwei ebenfalls mit dem Dämpfmedium gefüllte Arbeitskammern 23; 25. Die untere Arbeitskammer 25 ist über eine Strömungsverbindung in der Bauform eines Axialkanals 27 innerhalb eines Kolbenstangenzapfens 29 mit dem kolbenstangenfernen Arbeitsraum 9 verbunden. Zwischen dem kolbenstangenseitigen Arbeitsaum 7 und der oberen Arbeitskammer 23 besteht eine Strömungsverbindung als eine Anschlussöffnung 31. Über den Axialkanal 27 und die Anschlussöffnung 31 werden Volumenänderungen der beiden Arbeitskammern 23; 25 ausgeglichen, so dass beide Arbeitskammern 23; 25 permanent mit Dämpfmedium gefüllt sind.

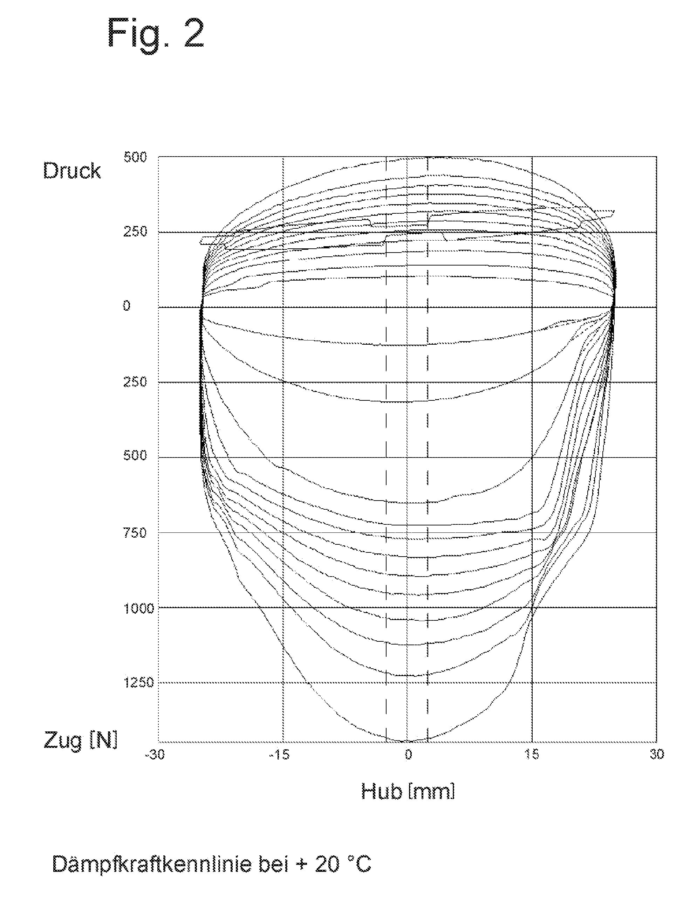

Bei einer Kolbenstangenbewegung und einer in seiner Ausgangslage mittigen Position des Trennkolbens 21 wird das verdrängte Dämpfmedium von einer der Arbeitskammern 23; 25 aufgenommen, wobei der Trennkolben 21 einen Verschiebeweg ausführt. Gleichzeitig steht auch Dämpfmedium in den Durchtrittsquerschnitten 11; 13 an dem Voröffnungsquerschnitt 18 und den druckbeaufschlagten Flächen der Ventilscheiben 15; 17 an. In Abhängigkeit von der Vorspannung der Ventilscheiben, der Größe des Voröffnungsquerschnitts 18 und der Dimensionierung des Axialkanals 27 sowie der Anschlussöffnung 31 stellt sich bei einer vorgegebenen Kolbenstangengeschwindigkeit ein bestimmtes Dämpfkraftverhalten aller die Dämpfkraft erzeugenden oder beeinflussenden Elemente ein. In der Figur 2 sind Dämpfkraft-Hub-Kennlinien für verschiedene Sinusschwingungen mit maximalen Kolbenstangengeschwindigkeiten dargestellt. Die Kennlinien sind für die folgende Erklärung im Uhrzeigersinn zu betrachten. Ausgehend der Ruheposition der Kolbenstange, also wenn die Geschwindigkeit v der Kolbenstange = 0 und die Dämpfkraft 0 ist, setzt die Dämpfkraft in den Kurven für kleine maximale Kolbenstangengeschwindigkeiten relativ moderat ein und steigt dann an. In diesem Ausführungsbeispiel ist das der Bereich zwischen Hub 25mm und 15mm. Die "Delle" in der Dämpfkraftkennlinie kennzeichnet die Funktion der amplitudenabhängigen Dämpfkraft. Ab dem Hubbereich kleiner 15mm in Richtung Hub = 0 mm hat der Trennkolben einen Boden 33 oder einen Deckel 35 des Gehäuses 19 erreicht. Spätestens dann öffnen sich bei fortgesetzter Kolbenstangenbewegung mit hoher Geschwindigkeit die Dämpfventile 11; 15 oder 13; 17.

Bei tiefen Temperaturen kann bei herkömmlichen Schwingungsdämpfern mit amplitudenabhängiger Dämpfkraft ein deutlich vernehmbares Geräusch auftreten.

Deshalb wird der Dämpfmediumstrom zwischen mindestens einer Arbeitskammer 23; 25 des Gehäuses 19 und mindestens einem Arbeitsraum 5; 7 des Zylinders 3 temperaturabhängig beeinflusst. In der Dämpfkraftkennlinie macht sich der Effekt dadurch bemerkbar, dass die "Delle" in dem besagten Hubbereich nicht auftritt. Die Dämpfkraftkennlinie wird praktisch geglättet, wie beispielhaft durch die gestrichelte Dämpfkraftkennlinie dargestellt ist.

Für eine einfache Abstimmung mit einem standardisierten Gehäuse 19 mit Kolbenstangenzapfen 29 kommt eine Kalibrierhülse 32 zur Anwendung, die einfach in den Axialkanal 27 des Kolbenstangenzapfens 29 eingepresst wird. Als Dimensionierungsgrößen dienen die Durchmesser $d_{27}$; $d_{31}$ und die Länge $L_{27}$. Man müsste noch die Wandstärke im Bereich der Anschlussöffnung 31 berücksichtigen, doch ist dieser Einfluss tendenziell zu vernachlässigen. Bei einer laminaren Strömung wirkt sich eine niedrige Temperatur und die damit verbundene hohe Viskosität des Dämpfmediums derart aus, dass sich der Drosselwiderstand des Dämpfmediums imm Axialkanal 27 sehr stark vergrößert und damit die Verschiebebewegung des Trennkolbens 29 verlangsamt wird bzw. nicht mehr auftritt, um die Dämpfkraft zu reduzieren. Damit wird das Gehäuse 19 temperaturabhängig stufenlos abgeschaltet. Man hat zwar keinen exakten Schaltpunkt, doch bietet die stufenlose Abschaltfunktion den Vorteil der weichen Übergänge, so dass keine sprunghafte Dämpfkraftänderung auftritt. Bei höheren Temperaturen und einer entsprechend niedrigen Viskosität des Dämpfmediums nimmt der Strömungswiderstand in dem Axialkanal 27 auf ein Maß ab, dass der Trennkolben 21 seine vorbestimmte Funktion erfüllen kann.

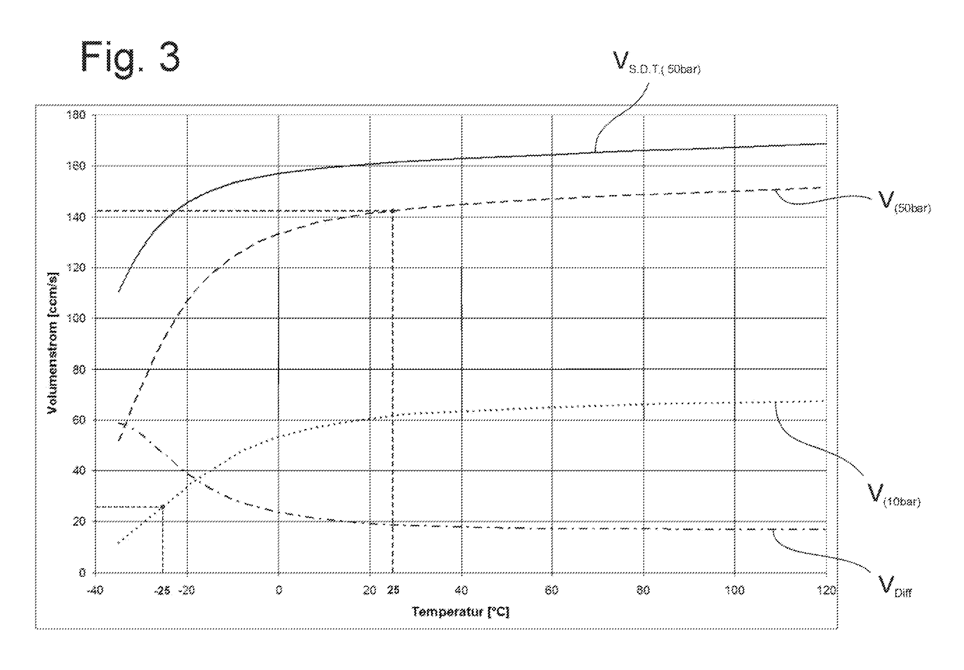

In der Fig. 3 sind Volumenstromkennlinien über der Temperatur aufgetragen. Die Volllinie steht für einen konventionellen Schwingungsdämpfer mit amplitudenabhängiger Dämpfkraft, wobei als Randbedingung für den Volumenstrom eine Druckdifferenz $\Delta p$ von 50bar

zwischen den Arbeitsräumen herrscht. Die Ausgestaltung der Dämpfventile 11; 13; 15; 17 spielt dabei keine Rolle. Entscheidend ist lediglich die Druckdifferenz Δp.

Unterhalb der Volllinie verläuft eine gestrichelte Linie, die bei erfindungsgemäß abgestimmten Strömungsverbindungen 27; 31 bei einer Druckdifferenz Δp von 50bar auftritt. Mag diese gestrichelte Linie auf den ersten Blick nahezu parallel verlaufen, so zeigt doch die strichpunktierte Linie die Volumenstromdifferenzen bei jeder Temperatur. Unterhalb einer Temperatur von 0°C steigt die strichpunktierte Linie deutlich an. Daraus ist erkennbar, dass der Volumenstrom innerhalb der Strömungsverbindungen 27; 31 deutlich abnimmt, also eine stufenlose Schaltfunktion realisiert ist. Oberhalb von 25°C verläuft die strichpunktierte Kennlinie waagerecht. Folglich gibt es im Normalbetrieb keine Komfortverschlechterungen im Vergleich zum Stand der Technik.

Eine punktierte Linie zeigt den Volumenstromverlauf bei einer Druckdifferenz Δp von 10bar. Auch bei diesem Graph ist unterhalb einer Temperatur von 0°C eine signifikante Volumenstromreduzierung erkennbar. Sowohl 10bar wie auch 50bar sind Druckverhältnisse, die in einem Schwingungsdämpfer üblicherweise auftreten und keinesfalls als Extremwerte anzusehen sind.

Die Schaltfunktion für die Strömungsverbindungen 27; 31 ist über einen Schaltfaktor VTP definiert, wobei der Schaltfaktor VTP größer ist als vier und aus dem Verhältnis eines Volumenstrom $V_{(25°; 50bar)}$ bei einer Temperatur von 25°C und einer Druckdifferenz von 50bar zwischen den Arbeitsräumen 7; 9 zu einem Volumenstrom $V_{(-25°; 10bar)}$ bei einer Temperatur von -25°C und Druckdifferenz von 10bar zwischen den Arbeitsräumen 7; 9 gebildet wird. Mit der Schaltfunktion sind die aus dem Stand der Technik bekannten Geräuschprobleme behoben. Zum besseren Verständnis sind in den beiden relevanten Volumenstromkennlinien jeweils der besagte Temperaturwert von 25°C und -25°C eingetragen. Bei 25°C und Δp 50 bar Druckdifferenz zwischen den Arbeitsräumen liegt ein Volumenstrom von ca. 142 ccm/s in den Strömungsverbindungen 27, 31 vor. Anhand der punktierten Linie für eine Druckdifferenz von Δp =10bar ist bei einer Temperatur von -25°C ein Volumenstrom von ca. 26 ccm/s abzulesen.

$$VTP = V_{(25°; 50bar)} / V_{(-25°; 10bar)}$$

$$VTP = 142/26$$

$$VTP = 5,46$$

Der Schaltfaktor ist > 4 und damit ist eine Schaltfunktion für die temperaturabhängige amplitudenselektive Dämpfkraft gewährleistet.

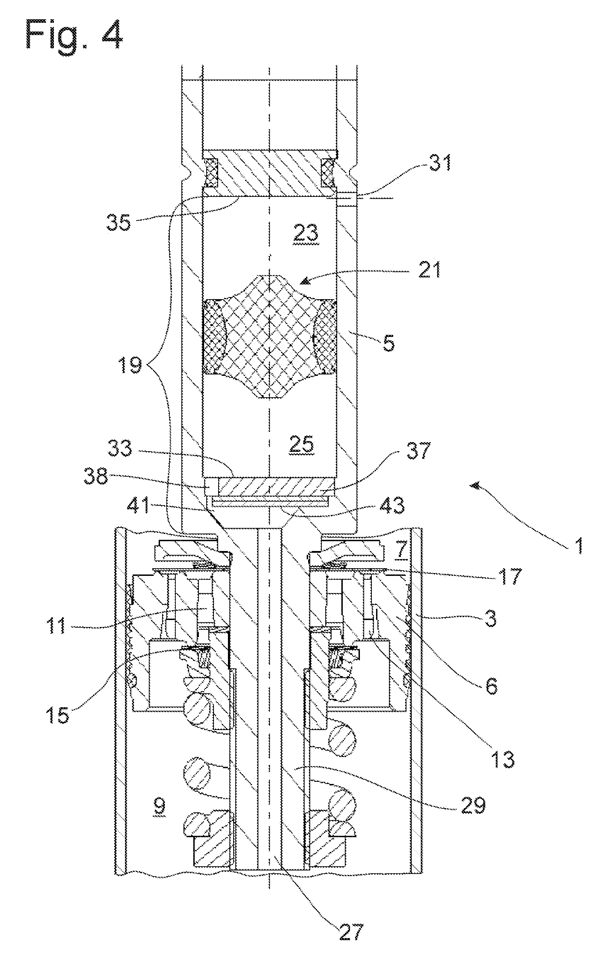

Die Figur 4 zeigt eine Alternativvariante, bei der die temperaturabhängig wirksame Beeinflussung der Strömungsverbindung 27 mittels einer temperaturabhängigen Ventilscheibe 43, z. B. einer Ventilscheibe aus Bi-Metall, erfolgt.

Wie in der Fig. 1 weist der Trennkolben 21 an seinem äußeren Rand eine kleinere Bauhöhe auf als im zentralen Bereich und die Strömungsverbindung 27 mündet exzentrisch in die Arbeitskammer 25. Die Strömungsverbindung 27 wird von einem Umlenkelement 37 radial nach außen geführt. Zumindest der zentrale Bereich des Trennkolbens besteht aus einem elastomeren Werkstoff, um Anschlaggeräusche zu vermeiden. Am Ende des Verschiebewegs des Trennkolbens wälzt sich der zentrale Bereich, bedingt durch seine Verformung auf dem Boden, der von dem Umlenkelement 37 gebildet wird, ab. Es entsteht ein Ringraum, in dem sich noch Dämpfmedium befindet. Dieses Dämpfmedium kann über eine Austrittsöffnung 38, die z. B. in Umlenkscheibe 37 angeordnet ist, in den Axialkanal bzw. aus dem Axialkanal 27 in die Arbeitskammer 25 übertreten.

Das Umlenkelement 37 wird von einer Prallscheibe gebildet, die an den Axialkanal 27 angeschlossen wird. Zusätzlich bildet die Prallscheibe zusammen mit dem Gehäuse einen Querkanal 41, so dass die Austrittsöffnung 38 von dem Trennkolben 21 nicht verschlossen werden kann.

Die temperaturabhängig wirksame Ventilscheibe 43 ist an einer Wandung des Gehäuses 19 fixiert. In diesem Ausführungsbeispiel wird die Ventilscheibe 43 von dem Umlenkelement 37 auf einem Absatz des Gehäuses in Richtung des Querkanals 41 gehalten und ist damit den Aufprallkräften des Trennkolbens 21 nicht ausgesetzt.

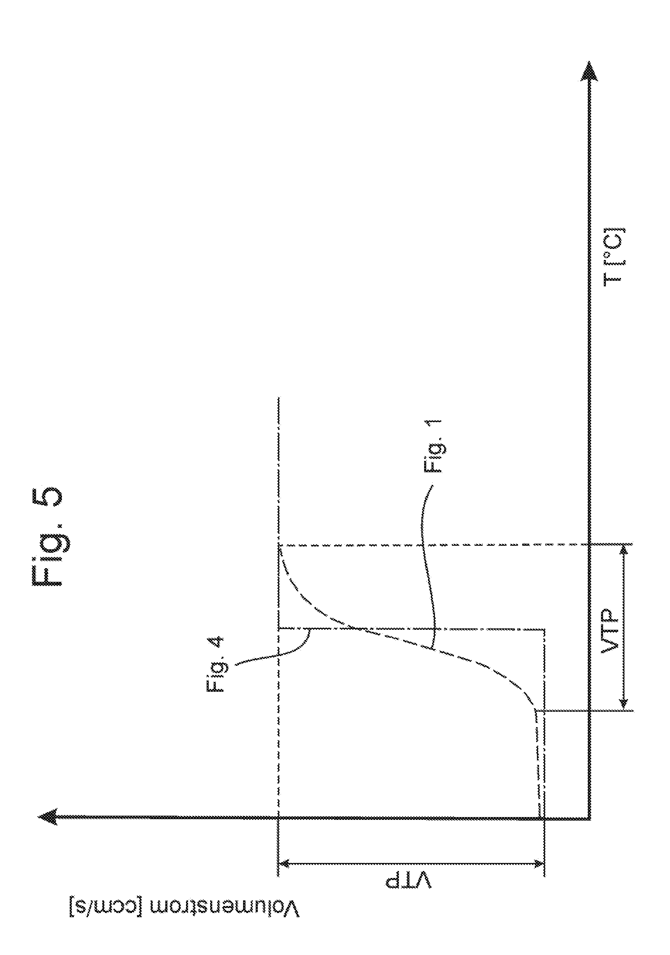

Die Figur 5 zeigt einen Vergleich der Varianten nach den Figuren 1 und 4. Die Ausführungsform 4 mit der Ventilscheibe 43 entspricht tendenziell einer klassischen Ein-Aus-Funktion mit einem ausgeprägten Schaltpunkt, der als Sprung im Volumenstrom einer Temperatur zugeordnet werden kann.

Die Lösung nach der Fig. 1 enthält auch eine Schaltfunktion, doch verläuft sie welcher. Durch die Größe des Faktors VTP wird der Übergang hinsichtlich der Temperaturspanne wie auch der Volumenstromreduzierung bestimmt.

**Patentansprüche**

1. Schwingungsdämpfer (1), umfassend einen mit einem Dämpfmedium gefüllten Zylinder (3), in dem eine Kolbenstange (5) mit einem Kolben (6) axial beweglich geführt ist, wobei der Kolben (6) den Zylinder (3) in einen kolbenstangenseitigen und einen kolbenstangenfernen Arbeitsraum (7; 9) unterteilt und für mindestens eine Bewegungsrichtung der Kolbenstange (5) ein Arbeitsraum (7; 9) für eine amplitudenselektive Dämpfkraft über eine Strömungsverbindung (27; 31) mit einer Arbeitskammer (23; 25) in einem Gehäuse (19) verbunden ist, wobei die Arbeitskammer (23; 25) durch einen axial beweglichen Trennkolben (21) zum anderen Arbeitsraum (7; 9) abgetrennt ist,
**dadurch gekennzeichnet,**
**dass** der Dämpfmediumstrom zwischen mindestens einer Arbeitskammer (23; 25) des Gehäuses (19) und mindestens einem Arbeitsraum (7; 9) des Zylinders (3) temperaturabhängig beeinflusst wird.

2. Schwingungsdämpfer nach Anspruch 1,
**dadurch gekennzeichnet,**
**dass** das Gehäuse (19) durch eine definierte Abstimmung der Dimensionierung der Strömungsverbindung (27; 31) temperaturabhängig stufenlos schaltbar ist.

3. Schwingungsdämpfer nach Anspruch 2,
**dadurch gekennzeichnet,**
**dass** eine Schaltfunktion für die Strömungsverbindung (27; 31) über einen Schaltfaktor VTP definiert ist, wobei der Schaltfaktor VTP größer ist als vier und gebildet wird aus dem Verhältnis eines Volumenstroms $V_{(25°; 50bar)}$ bei einer Temperatur von 25˚C und einer Druckdifferenz von 50bar zwischen den Arbeitsräumen (7; 9) zu einem Volumenstrom $V_{(-25°; 10bar)}$ bei einer Temperatur von -25˚C und Druckdifferenz von 10bar zwischen den Arbeitsräumen (7; 9).

4. Schwingungsdämpfer nach Anspruch 2,
**dadurch gekennzeichnet,**
**dass** innerhalb der Strömungsverbindung (27) ein Kalibrierröhrchen (32) eingesetzt ist.

5. Schwingungsdämpfer nach Anspruch 1,
**dadurch gekennzeichnet,**
**dass** eine temperaturabhängige Ventilscheibe (43) den Durchflussquerschnitt der Strömungsverbindung (27) steuert.

6. Schwingungsdämpfer nach Anspruch 5,
**dadurch gekennzeichnet,**
**dass** die temperaturabhängig wirksame Ventilscheibe (43) an einer Wandung des Gehäuses (19) fixiert ist.

# Fig. 1

# Fig. 2

Dämpfkraftkennlinie bei + 20 °C

Fig. 3

EP 2 163 783 A2

# Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004034057 B4